# EUROPEAN PATENT SPECIFICATION

(11) **EP 1 446 617 B1**
(45) Date of publication and mention of the grant of the patent: **05.12.2007**
(21) Application number: 02780242.0
(22) Date of filing: 31.10.2002
(51) Int. Cl.: F25B 49/02, F24D 17/02, F24F 5/00

(54) **Exhaust air heat pump**
Abluftwärmepumpe
Pompe à chaleur pour l'air extrait

(30) Priority: 01.11.2001 SE 0103622
(43) Date of publication of application: 18.08.2004
(73) Proprietor: Hedlund, Gunnar, 182 33 Danderyd (SE)
(72) Inventor: Hedlund, Gunnar, 182 33 Danderyd (SE)
(74) Representative: Rosenquist, Per Olof
(86) International application number: PCT/SE2002/001981
(87) International publication number: WO 2003/038353

(56) References cited:
- DE-A1- 2 704 630
- US-A- 3 355 906
- US-A- 4 175 403
- US-A- 4 389 857
- US-A- 4 910 968
- US-A- 4 989 414
- US-A- 5 095 715
- US-A- 5 984 198

## Description

The present invention relates to an exhaust air heat pump.

### Background

There is a large number of products and models of heat pumps on the market. These uses various heat sources such as heat from rock, heat from the surface of the ground, heat from sea, outdoor air, exhaust air, and others. Heat pumps for heat from rock, heat from the surface of the ground and heat from sea make use of, in most cases, only one heat carrier consisting of water/ethanol mixture that is pumped throughout a long tubing through the heat source and collects heat that later is given off to the evaporator of the heat pump, usually located indoors together with the remainder of the heat pump. Heat pumps for outdoor air has the evaporator located outdoor having a fan that blows outdoor air through the same. The compressor can be located outdoors or indoors.. Thus, these two kinds of heat pumps are put together partly outdoors and partly indoors, but in common for all above heat pumps is that the output power is fundamentally unlimited, and by that can be chosen plainly on economical basis. A heat pump power is often installed that gives about 90% of the total need of heat and hot water of the house over an annual period.

Unlike the previous mentioned kinds of heat pumps, the exhaust air heat pump is usually one single unit that is put together indoors. Exhaust air heat pumps are put together indoors where the ventilation channel is passing and has its evaporator connected to that. The disadvantage with the exhaust air heat pumps that exists today is that the in most cases only gives about 30-50% of the total need of heat and hot water over an annual period.

All of the above mentioned kinds of heat pumps are normally connected to the heat system of the house and/or heat water system.

In patent publication DE 4339880 is disclosed a heat pump with varying capacity. That requires an overdimensioned compressor in order to meet the majority of the house need of heat, besides those disadvantages an outdoor air heat pump in it self has with low efficiency, noise problems, reliability and demands on the outdoor installation.

In patent publication US 5095715 is disclosed a reversible air-conditioning/heat pump with varying capacity.

In patent publication DE 3915349 is disclosed how an increase of regulation area at temperature regulation with inverter for air-conditioning can be done.

US-A-3,355,906 discloses a refrigeration system, and a method as well for controlling a heat pump, having a condenser, an evaporator, a compressor, and an expansion valve. Hence, US-A-3, 355, 906 discloses many features of the accompanying claim 1 according to the present patent application.

### Description of the Invention

One object with the present invention is to provide a heat pump that combines the advantages with the existing kinds of heat pumps and that simultaneously eliminates the above mentioned problem of known heat pumps. Yet an object is to provide a heat pump that shall be able to give as high installed capacity as all other types of heat pumps and that gives a total energy consumption that is minimal.

This object is obtained by an exhaust air heat pump according to the present invention as defined in claim 1, where an evaporator is arranged to a cooling circuit of the heat pump, which is connected to a channel for cooling by the evaporator of a passing fluid flow in the channel, a compressor with a variable capacity adapted to increase a pressure of a circulated refrigerant in the cooling circuit, a condenser which emits heat to indoor air or alternatively to tapping or circulating hot water, an expansion valve arranged in connection to the evaporator which decreases pressure and temperature of the refrigerant before the refrigerant reaches the evaporator, that a ratio between a condenser pressure of the condenser and an evaporator pressure of the evaporator is continuously controlled and that the capacity of the compressor is reduced if said ratio exceeds a predetermined maximum value or if the required heat falls below the capacity of the heat pump, whereby the reduced utilization of capacity of the compressor results in that the heat pump at low and moderate load operates at relatively low capacity and that the average heat factor thereby can be enhanced.

The exhaust air heat pump according to the present invention implies that the heat pump can provide a high capacity at highest load, as well as high efficiency at medium high and low load. Thanks to the fact that pressure ratio can be controlled such that it is kept within allowable limits and that the capacity of the compressor is variable, the heat factor can be increased at low and moderate load, and with that the average heat factor is raised. At lower utilization of capacity the differential temperature becomes lower and thereby the heat factor higher.

According to a preferred embodiment of the present invention the evaporator temperature be controlled and the capacity of the condenser be reduced if the value of the evaporator temperature falls below predetermined minimum value.

According to the present invention, the heat pump utilizes exhaust air as heat source. Thus said fluid flow, in the channel to which the evaporator is connected, is air. In that respect the air flow and the evaporator be formed such that the exhaust air can be cooled down maximally to a considerably lower temperature than for existing exhaust air heat pumps. When the energy yield at down-cooling of the air originate from the heat capacitive of the air, partly from heat of evaporation at water precipitation, the above larger temperature decrease result in that the maximum capacity of the heat pump increases proportionally once more than the difference in temperature decrease.

The evaporator is a heat exchanger which according to the present invention is formed of a "package" of tubes and plates that together shall create large heat-conducting surfaces between two mediums, that besides also concerns the condenser according to the present invention. The surface that will be exposed towards the first medium is called primary surface, which in this description relates to the total inner surface of the coil of piping that the refrigerant flows through in the evaporator. The surface that is exposed towards the second medium is called secondary surface, which in this description relates to the total surface of partly outer surface of above mentioned piping, partly the total surface of the plates, suitably of aluminium, that the piping is fixed to. Accordingly, this is the surface that the passing fluid flow, preferably air, conducts heat to. The plate surface may preferably be substantially much larger than the piping surface, such that the secondary surface becomes much larger than the primary surface. Under a given primary surface and secondary surface the evaporator package can still be formed with different geometrical shape, i.e. as concerns the outside measurements. This can be done such as in the shape of a cube, a flat lying box, or a standing flat box, on condition that the fluid flow is horizontal. With "evaporator surface" in this description is thus meant secondary surface.

With front surface.is meant the surface that the evaporator package has transverse the fluid flow. With e.g. one laying flat box, seen from the side, the front surface becomes small and with a standing flat box it becomes large. According to the present invention the shape is preferably in form of a standing flat box, to obtain the smallest flow resistance for the fluid, especially at initial frosting..If it, seen from the front, is high and narrow or low and wide has no major importance. The main thing is that a length (L) in the fluid flow direction is short in relation to the front surface (A) transverse the fluid flow direction, when the flow resistance increases with increasing length but decreases with increasing front surface.

The evaporator is dimensioned such that its secondary surface is at least 0.3 m² per 1/s air flow. Suitably, the evaporator comprises an evaporator circuit which constitutes of a formed coil of piping for the circulating refrigerant, where a first third part of the coil of piping of the evaporator circuit is evenly spread over the whole evaporator surface and thereby has a favourable thermal contact with the entire evaporator surface, whereby a large efficient evaporator surface is provided. The evaporator has a front surface (A) and a length (L) and the relationship between the front surface and the length is chosen such that the condition A/(L*L)>2 is fulfilled.

Further, according to an embodiment, may a diffusor with at least two zones with varying flow resistance be arranged in the channel connected to the evaporator.

If hot water circuits for tapping and circulating hot water, respectively, which are connected to the condenser, are arranged such that they are thermally separated, the maximum utilization of capacity of the heat pump can be lower when the heat pump is heating only hot water than when the heat pump is heating only circulating water.

Suitably, according to a preferred embodiment, the capacity of the compressor can be reduced to a value such low that the evaporation occurs at a temperature above the freezing point of water.

According to yet a preferred embodiment, the evaporation at a highest capacity of the compressor can be brought to occur at a temperature < -10°C.

Further, according to the exhaust air heat pump, the utilized heat pump can be provided with means for supplying of additional heat, where an indoor temperature is controlled by feedback of the indoor temperature to a temperature regulator which controls the rotation speed of the heat pump and the additional heat, that the regulator keeps the indoor temperature substantially constant at preset value for such a long time that the heat pump alone provides sufficient heat power, simultaneously as it permits that the indoor temperature decreases to a certain value below the preset value until the additional heat is put in.

Means for reduction of the capacity of the compressor is in itself known for the person skilled in the art.

### Description of the Drawings

The present invention will now be described in embodiments in greater detail, with reference to the accompanying drawings, without interpreting the invention limited thereto, where
figure 1 shows in a schematic drawing the basic accomplishment of a heat pump existing on the market that utilizes exhaust air as heat source,
figure 2 shows in a schematic drawing according to the present invention,
figure 3 shows in a diagram efficiency as a function of capacity for different heat pumps and additional heat radiators,
figures 4 and 5 illustrate schematically an evaporator according to prior art,
figures 6 and 7 illustrate schematically an evaporator according to present invention,
figures 8 and 9 show schematically in a cut lengthwise different air channel shapes according to prior art,
figure 10 shows schematically in a cut lengthwise alternative air channel shapes,
figure 11 shows schematically in a cut lengthwise an alternative air channel shape with variable diffusor according to the invention,
figure 12 shows schematically in a cut lengthwise another alternative air channel shape with variable diffusor according to the invention,
figure 13 shows schematically in a cut lengthwise an alternative air channel shape with variable diffusor according to the invention where a part of the air channel is blocked by the components of the heat pump,
figure 14A shows schematically in a view in one plane a variable diffusor according to the invention in the shape of a perforated plate, and
figure 14B shows the diffusor in fig. 14A in a cross-section A-A.

### Detailed description of embodiments

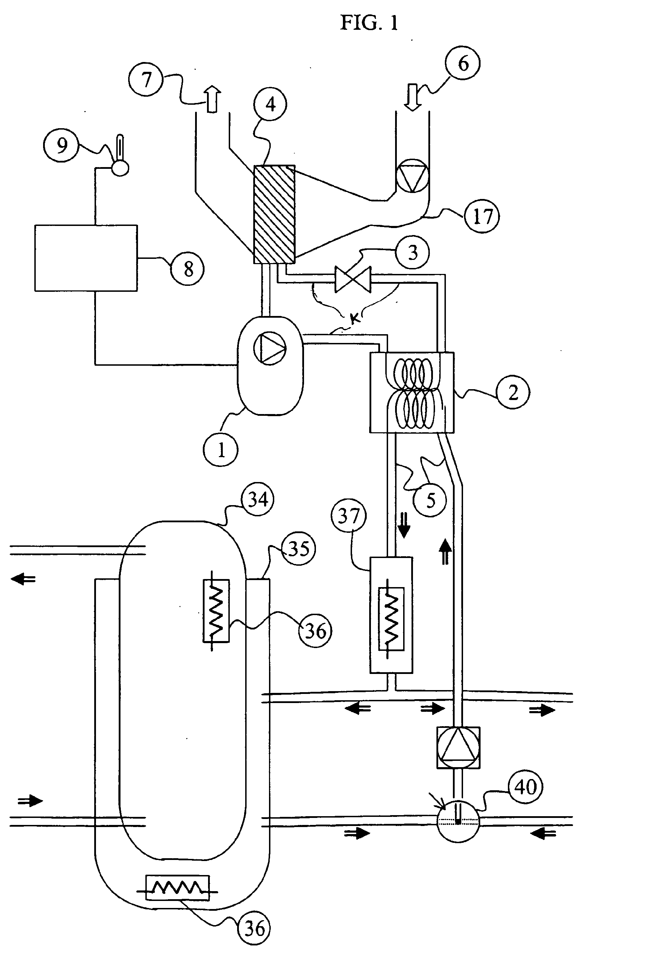

Fig. 1 shows an exhaust air heat pump according to prior art, which has a cooling circuit K that contains an evaporator 4 which is arranged in air channel 17 and cool down the exhaust air 6 that passes, a compressor 1 that increases pressure of the refrigerant, a condenser 2 that emits heat to tapping or circulating hot water 5, an expansion valve 3 that decreases pressure and temperature of the refrigerant before the refrigerant again reaches the evaporator. The compressor is run with 50 or 60 Hz alternating current and runs with constant rotation speed. The exhaust air is cooled from indoor temperature down to between 0°C and +5°C. The power of the heat pump is controlled in relation to the outdoor temperature by a temperature sensor 9 of automatic control electronics 8 that controls on/switch off of the heat pump and additional heat.

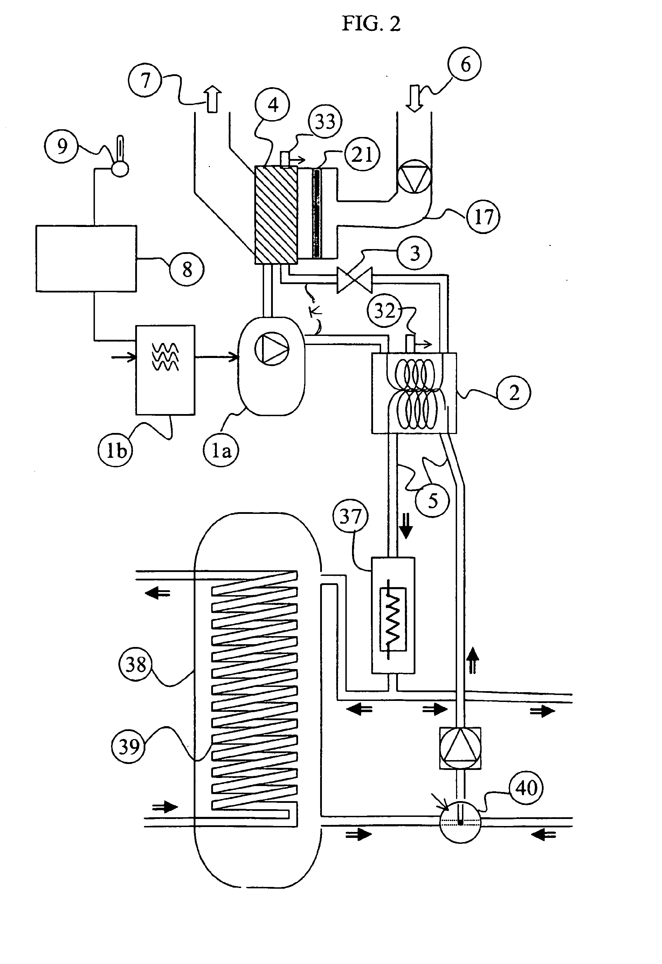

An exhaust air heat pump according to the invention, as shown in fig. 2, comprises and works with the similar features 2-6, 8, 9 and 17 as an existing exhaust air heat pump as disclosed above, but has higher capacity, is dimensioned for lower evaporator temperature, has larger efficient evaporator surface and the compressor la has been supplemented with an electronic motor control 1b, control of the difference in pressure, and suitably also control of the evaporator temperature 33. The exhaust air heat pump may also in a preferred embodiment also comprise a variable diffusor 21, which is further described below.

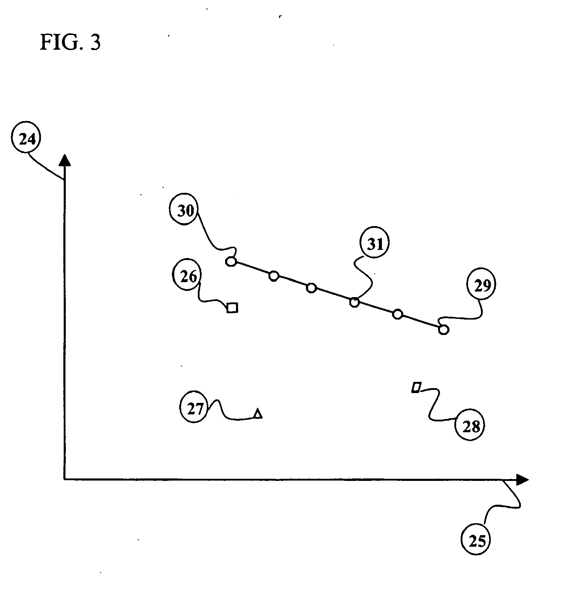

As an efficiency of a heat pump is strongly dependent of difference in pressure between the evaporator and the condenser, a low evaporator temperature result in that the efficiency 24 of the heat pump as a function of capacity 25 in this case of operation 29 according to the present invention is lower than for existing exhaust air heat pumps 26 which is shown in the diagram in fig. 3. In the case the requirement of heat is large, electric additional heat is used in existing exhaust air heat pumps having a low efficiency 27 in this matter, which in total provide a much total inferior efficiency 28 of the heat pump and additional heat, than is the case with the efficiency for the present invention 29. Consequently, in this case is the gain of the efficiency in relation to existing technique nevertheless large. In the case the required heat is fairly large or little, such that an existing heat pump has enough capacity without need of additional heat, the lower evaporator temperature would thus result in deteriorated efficiency. In order to avoid this, the capacity of the compressor is reduced, where the automatic control electronics 8 (see fig. 2) controls the effect to the present heat requirement. According to a preferred embodiment of the present invention the evaporator has a large effective evaporator surface. Thanks to the larger efficient evaporator surface, the evaporator temperature also becomes higher than for existing exhaust air heat pumps, and thus, the efficiency in this case of operation 30 according to the present invention becomes higher than for existing exhaust air heat pumps.

Suitably, according to the present invention, use is made of a compressor with asynchronous motor that is provided with frequency changer with frequency coverage about 25-90 Hz. Still a compressor with brushless D.C.-motor and control of rotation speed can be used. Also other kinds of capacity control of compressors exists that do not comprise control of rotation speed, but they are today not commercially available for the powers that are present for small houses. For the invention is nevertheless only required that a capacity controlled compressor is used, independent of which technique that is used for controlling the capacity.

The temperature of the used air 7, with reference to fig. 2, is dependent on the capacity of the compressor and also the temperature of the exhaust air 6, flow of air and atmospheric humidity. At highest capacity and an indoor temperature of 20-22°C the used air temperature is normally -10 to -15°C. At high atmospheric humidity and/or large air flow the temperature can be in the range -5 to -10°C. At low flow of air and low atmospheric humidity the temperature can be in the range -15 to -20°C. At reduced capacity of the compressor the temperature can be in the ranges 0 to -5°C or +5 to 0°C, the latter corresponding an existing exhaust air heat pump. If the heat pump is correctly dimensioned and the house is carefully insulated, a sufficient capacity is reached for about 90% of the heat required for the house. This is the heat pump capacity which one normally installs in small houses for heat pumps for heat from rock and heat from the surface of the ground.

Merely at very low outdoor temperatures the additional heat can be used in form of electric immersion heaters. Expansion valve 3 can be fixed or thermostatically connected to the evaporator temperature. In order to further expand the controllability of the heat pump a controllable expansion valve 3 may also be used, even if this is not necessary for obtaining an agreeable function.

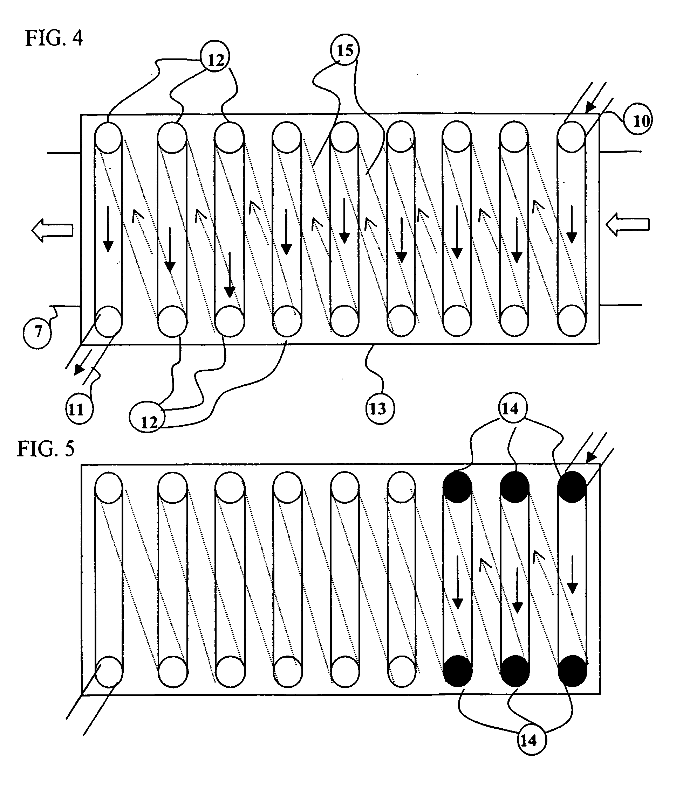

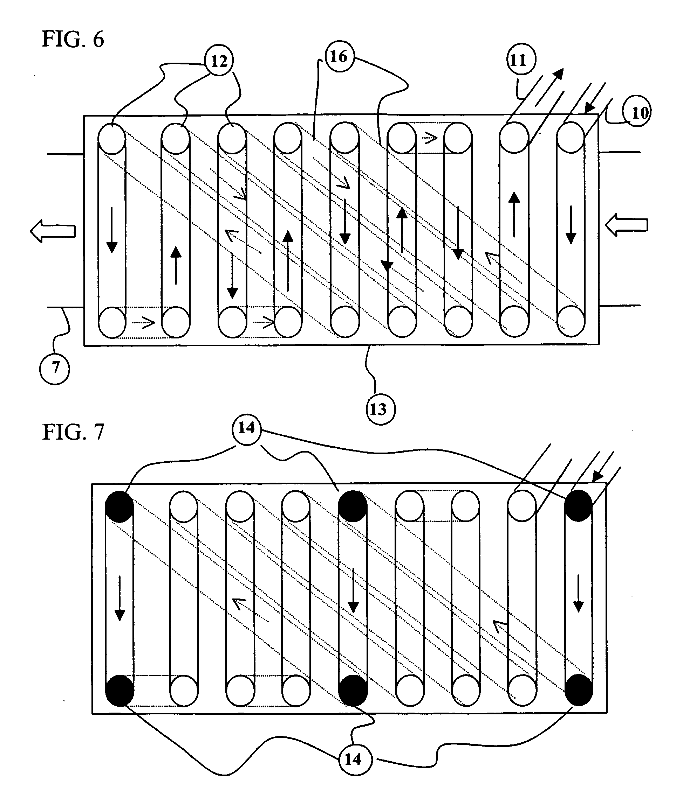

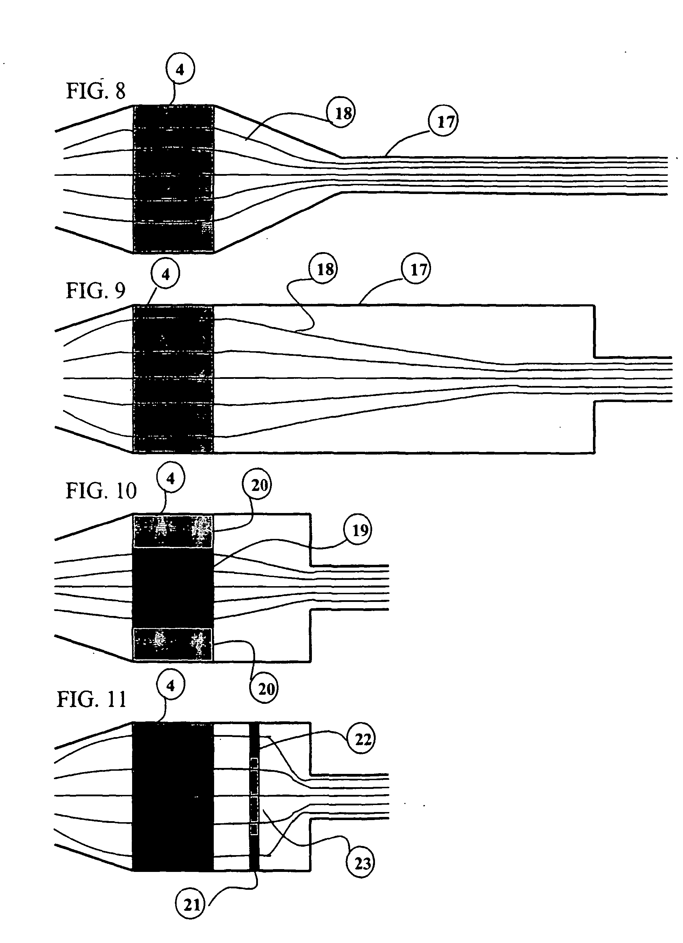

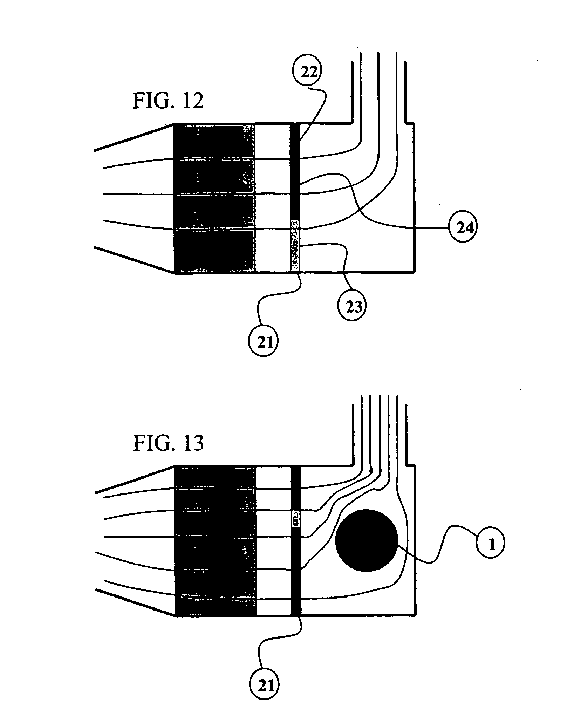

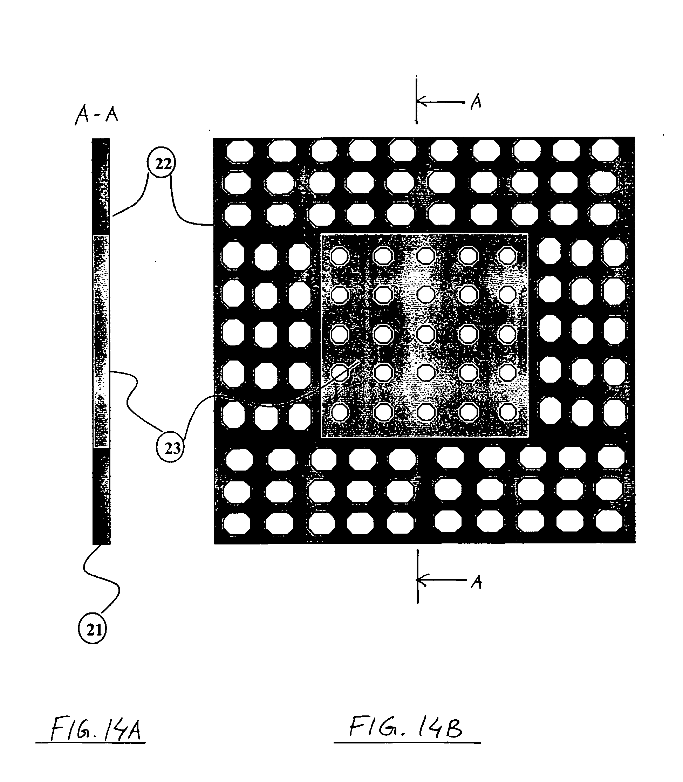

The evaporator 4 can be shaped such that the difference in temperature to the exhaust air is little. According to embodiments of the present invention as shown in figs. 6-7 this can be provided by that the efficient evaporator surface is made large (see i) and ii) below) and that the flow of air is evenly distributed over the front surface of the evaporator (see iii) below). The relationship between a front surface (below denoted A; not shown in fig.) and a length (below denoted L; not shown in fig.) of the evaporator should be chosen such that the flow resistance becomes small even at initial frosting, i.e. the front surface should be large in relation to the length of the evaporator in the direction of the air (see iv) below). This is done in order to avoid far too close defrosting interval. Below follows a description in more detail of embodiments i)-iv):
i) The evaporator is dimensioned such that its secondary surface, that is the surface that is in contact with the passing air, is in the size of at least about 0.3 m² per l/s air flow or larger.
ii) The evaporator is usually accomplished, as shown in fig. 4-5, by an evaporator circuit of copper pipings, that the refrigerant flow through from inlet 10 to outlet 11, which is attached to a larger heat conducting surface in any shape, e.g. a package of parallel plates 13 of aluminium. When the capacity of the compressor is varying, the flow of the refrigerant also fluctuates, and thereby the need of evaporator circuit.. At a low flow the evaporation will occur only at the first part of the evaporator circuit 14. In a preferred embodiment, as evident from figs. 6-7 of the invention, the evaporator is therefore shaped such that the efficient evaporator surface is large also in this case. This is achieved by bringing the coil of the evaporator circuit in such a way that also a small part of the evaporator circuit, such as the first third part, has a considerable thermal contact with the whole evaporator surface. According to prior art (fig. 4-5) the pipe parts 15 which are parallel with the plates connects usually adjacent perpendicular, heat conducting, pipe parts 12. According to the present invention, figs. 6-7, the pipe parts 16 that are parallel with the plates connects instead perpendicular, heat conducting, pipe parts 12 which are spread over the plates. One example of this is shown in fig. 6-7. Also other shapings of the coil of piping is possible.
iii) in order for the air flow to be equal over the evaporator front surface according to prior art, an air channel is formed such that its cross-section covers the greater part of the evaporator front surface, and a possible increase of the cross-sectional area in the air channel 17 occurs gradually over the length of the channel according to fig. 8 such that the current of air 18 follows the cross-section of the air channel the whole distance, or occurs abrupt a considerable distance before the evaporator according to fig. 9, during which the current of air 18 manage to adapt itself to the larger cross-section of the channel. A shaping of the channel where the increase of the cross-sectional area occurs abrupt only a short distance before the evaporator is shown in fig. 10. In this case the current of air 18 does not manage to adopt itself to the larger cross-section of the channel, but the greater part of the air passes through the central part 19 of the evaporator, where the velocity of the air accordingly becomes high. In the peripheral parts of the evaporator 20 the velocity of the air becomes low. This result in that the evaporator becomes inefficiently utilized and the output power as well as the efficiency of the heat pump becomes impaired. Hence, according to the present invention a diffusor 21 with variable flow resistance is installed in front of the evaporator according to fig. 11, where the flow resistance is low on the locations the velocity of air otherwise would be low 22, and large on the locations where the velocity of air otherwise would be high 23. The diffusor can be provided with two or several zones with varying flow resistance, or have a continuous varying flow resistance. Another shaping of the air channel with a diffusor according to the invention is shown in fig. 12, with three zones with varying flow resistance, low 22, high 23 and medium-sized 24. Yet a shaping of the channel with a diffusor according to the invention is shown in fig. 13. In this case a part of the air channel is occupied by the compressor 1 of the heat pump such that the current of air is substantially influenced by that. The diffusor is in this example divided in seven zones with varying flow resistance, where the darker shade indicates a lower flow resistance and lighter a higher flow resistance. One example of performance of a diffusor with two zones is shown in fig. 14, corresponding shaping of the channel and airflow according to fig. 11. The diffusor is here provided by a perforated plate with a zone 22 with large openings where the flow resistance is low and a zone 23 with small openings where the flow resistance is high.. Also other accomplishments are possible, such as screen materials with varying thickness or closeness.
iv) The condition A/(L*L) > 2 should be fulfilled, where A is front surface of the evaporator and L is the length of the evaporator.

The heat pump is suitably provided such that it can be used both for heating of circulating hot water or tapping hot water, which is usual for heat pumps. It is desirable at heating of tapping hot water that the water temperature and accordingly the temperature of condensation, is higher than at heating of circulating hot water. This results in that the difference in temperature between evaporation and condensation becomes much larger at maximum rotation speed of the compressor, which in turn results in low efficiency and deteriorate lifetime of the compressor. In order to avoid this, a lower rotation speed can advantageously be used as maximum rotation speed at heating of tapping water, according to the present invention, at heating of tapping water, which results in higher temperature of evaporation and thus improved heat factor 31 (see fig. 3) and also increased lifetime on the compressor.

Exhaust air heat pumps existing on the market uses usually a heat container in the form of a double jacketed water container where the inner part 34 constitutes container for hot water with upper and lower temperature zone, and the outer part 35 comprises circulating water as evident in fig. 1. The heat pump heats directly the outer part, and also the lower zone in the inner part through the jacket from the outer part. Usually there is also additional heat elements 36 that can be installed in heat containers, respectively, or in a separate flow through heater 37. A considerable heat transmission takes part between the containers. This is done in order for the heat from the heat pump efficiently shall be able to heat the hot water as well as circulating water. In addition, this results in that the hot water often requires a substantial part of additional heat in order to rise to desired temperature and/or that the heat pump operates with unnecessary high temperature of condensation at heating of circulating water.

According to a preferred embodiment of the invention, hot water circuits are used that are thermally separated for the hot water for tapping and for the circulating hot water, respectively. In this case, as is evident from fig. 2, indirect heating of the hot water for tapping through a accumulator container 38 with a coil of pipings 39 inside, where the hot water for tapping is conveyed through the coil of pipings in case of drawing off and is heated to correct temperature while it passes through the container. A control valve 40 alters between heating of the circulation hot water and heating of the accumulator container for tapping hot water. This results in that the flow of heat between the tapping hot water and circulation hot water becomes negligible and the temperatures on those can be controlled entirely independent of each other. This also results in that the heat pump can operate only with production of hot water or only heating of circulating water, which provides maximal hot water capacity and the very best utilization of the heat pump for heating of circulation hot water as well as tapping hot water.

In order to maximize the lifetime of the compressor it is also desirable to limit the ratio of the pressure between condensation and evaporation to a certain value, e.g. 6 or 8. In order to accomplish this, the pressures are measured on the parts, respectively, directly or indirectly through the temperature of condensation 32 and the temperature of evaporation 33. Through indirect measurement the temperatures are recounted to pressures for the control, starting from condensation-temperature curve of the refrigerant. If the ratio exceeds the limiting value, the rotation speed of the compressor is then reduced until the ratio goes down to the permitted value. It is also desirable to limit the temperature of evaporation to a lowest permitted value. In order to accomplish this, the temperature of evaporation is measured directly or indirectly through the evaporation pressure. If the temperature of evaporation falls below the limiting value, the rotation speed of the compressor is then reduced until the temperature goes up to permitted value.

At a high capacity utilization of the heat pump, the evaporation occurs at temperatures essentially below the freezing point of water, a major part of the humidity that is present in the indoor air precipitates and frosting occurs on the evaporator. Consequently, the heat pump is according to prior art provided with an apparatus for automatic start of defrosting when it is needed. Defrosting of an exhaust air heat pump is done according to prior art usually by turning of the heat pump and the heat from the exhaust air melts the ice, whereupon the heat pump restarts after a predetermined period or when the evaporator reach a predetermined temperature. According to a preferred embodiment of the invention, the defrosting is instead carried out by reducing the capacity of the compressor to a value that low, such that the evaporation occurs at a temperature above the freezing-point for water. By that means the exhaust air can melt the ice without the compressor being stopped. When the defrosting is finished, the capacity of the compressor is returned to the desired value. This results in essentially lower operational periods and increasing lifetime of the compressor.

The indoor temperature of the house can be controlled by feedback of the indoor temperature by a temperature sensor 9 of automatic control electronics 8 that controls the rotation speed of the heat pump and the additional heat (see fig. 1 and 2). A corresponding temperature control intended for air conditioning is described in the patent document EP 0522878.

In a preferred embodiment of the present invention, the utilization of additional heat is also reduced to a minimum as follows below. The automatic control electronics keeps the indoor temperature more or less constant on preset value as long as the heat pump alone provides sufficient heat power. When the heat pump is running on maximum revolutions and the indoor temperature yet falls below the predetermined value, a certain decrease in temperature is permitted before the additional heat is put in circuit. The additional heat is then disengaged before the predetermined value is reached again. This results in that the heat stored in the house is used to keep the temperature up in the house during cold nights. During the day, the need for heating decreases due to higher outdoor temperature, insulation and increased waste heat from the household, whereby the temperature may go up to predetermined value again solely with support by the heat pump without any addition of additional heat. By this way the heat pump is used solely as heat source a longer period of the year than otherwise would be possible, and the total need of energy decreases in relation to a system where the temperature is kept constant by support of additional heat. The gain will be larger than with conventional decrease during nights of the temperature, where in that case the temperature during nights is indeed decreased in the house, but usually you also warm up the house again during the coldest period of the day and night, and then is forced to use additional heat for that.

## Claims

1. An exhaust air heat pump, where a ratio between a condenser pressure of a condenser (2) and an evaporator pressure of an evaporator (4) is set up to be continuously controlled and that the capacity of a compressor (1) is arranged to be reduced if said ratio exceeds a predetermined maximum value or if the required heat falls below the capacity of the heat pump, whereby the reduced utilization of capacity of the compressor (1) results in the heat pump at low and moderate load operating, at relatively low capacity and the average heat factor can thereby be enhanced, the heat pump comprises a cooling circuit (K) arranged at the evaporator (4) of the heat pump, which heat pump is connected to a channel (17) for cooling by the evaporator of a passing flow of air in the channel, the compressor (1) of the heat pump is provided with a variable capacity and increases the pressure of a circulated refrigerant in the cooling circuit, the condenser (2) of the heat pump emits heat to indoor air or alternatively to tapping or circulating hot water (5), and the heat pump further comprises an expansion valve (3) arranged in connection with the evaporator which decreases pressure and temperature of the refrigerant before the refrigerant reaches the evaporator, whereby the exhaust air heat pump comprises a secondary surface of the evaporator (4) of at least 0.3 m² per l/s air flow and being in contact with said airflow and that the exhaust air heat pump has a relationship between a front surface (A) and a length (L) of the evaporator in the direction of the airflow such that the condition A/(L*L)>2 is fulfilled.

2. The exhaust air heat pump according to claim 1, whereby also the evaporator temperature is controlled and the capacity of the compressor (1) is reduced, by means of automatic control electronics (8), if the value of the evaporator temperature falls below predetermined minimum value.

3. The exhaust air heat pump according to claim 1, wherein that the evaporator comprises an evaporator circuit (14) which consists of a formed coil of piping for the circulating refrigerant, arranged to an evaporator, where a first third part of the coil of piping of the evaporator circuit is evenly spread over the whole evaporator surface and thereby has a favourable thermal contact with the entire evaporator surface, whereby a large efficient evaporator surface is provided.

4. The exhaust air heat pump according to claim 1, wherein a diffusor (21) with at least two zones with varying flow resistance is arranged in the channel (17) connected to the evaporator (4).

5. The exhaust air heat pump according to claim 1, where hot water circuits for tapping and circulating hot water, respectively, which are connected to the condensor, are thermally separated, and the maximum utilization of capacity of the heat pump is set to be lower when the heat pump is heating only hot water than when the heat pump is heating only circulating water.

6. The exhaust air heat pump according to any of the preceding claims, wherein the capacity of the compressor is arranged to be reduced to a value so low that the evaporation occurs at a temperature above the freezing point of water.

7. The exhaust air heat pump according to any of the claims 1-5, wherein the evaporation at a highest capacity of the compressor occurs at a temperature of -10°C.

8. The exhaust air heat pump according to claim 1, where the heat pump is provided with means for supplying of additional heat, and an indoor temperature is controlled by feedback of the indoor temperature to a temperature sensor (9) of automatic control electronics (8) arranged in the exhaust air heat pump, that controls the rotation speed of the heat pump and the additional heat, the automatic control electronics (8) being arranged to keep the indoor temperature substantially constant at a preset value for such a long time that the heat pump alone provides sufficient heat power, simultaneously as it permits that the indoor temperature decreases to a certain value below the preset value until the additional heat is supplied.

## Patentansprüche

1. Eine Abluftwärmepumpe, bei der ein Verhältnis zwischen einem Kondensordruck eines Kondensors (2) und einem Verdunstungsdruck eines Verdunsters (4) eingerichtet ist, kontinuierlich gesteuert zu werden, und dass die Leistung eines Kompressors (1) eingerichtet ist, reduziert zu sein, falls das Verhältnis einen vorgegebenen maximalen Wert überschreitet oder falls die erforderliche Wärme unter die Leistung der Wärmepumpe absinkt, wobei die reduzierte Nutzung einer Leistung des Kompressors (1) darin resultiert, dass die Wärmepumpe bei geringer und moderater Last mit relativ geringer Leistung betrieben wird und der durchschnittliche Wärmefaktor **dadurch** verbessert werden kann, wobei die Wärmepumpe einen Kühlkreislauf (K) umfasst, der an dem Verdunster (4) der Wärmepumpe eingerichtet ist, wobei die Wärmepumpe mit einem Kanal (17) zum Kühlen einer in dem Kanal verlaufenden Luftströmung durch den Verdunster verbunden ist, wobei der Kompressor (1) der Wärmepumpe mit einer variablen Leistung ausgestattet ist und den Druck eines zirkulierten Kühlmittels in dem Kühlkreislauf erhöht, wobei der Kondensor (2) der Wärmepumpe Wärme in Innenraumluft oder alternativ in abzweigendes oder zirkulierendes heißes Wasser (5) abgibt, und die Wärmepumpe des Weiteren ein in Verbindung mit dem Verdunster eingerichtetes Expansionsventil (3) umfasst, das Druck und Temperatur des Kühlmittels reduziert, bevor das Kühlmittel den Verdunster erreicht, wobei die Abluftwärmepumpe eine sekundäre Oberfläche des Verdunsters (4) von wenigstens 0,3 m² pro l/s Luftstrom umfasst, die mit dem Luftstrom in Kontakt steht, und dass die Abluftwärmepumpe eine Beziehung zwischen einer vorderen Oberfläche (A) und der Länge (L) des Verdunsters in der Richtung des Luftstroms aufweist, die die Bedingung A/(L*L)>2 erfüllt.

2. Abluftwärmepumpe gemäß Anspruch 1, wobei mittels einer automatischen Steuerelektronik (8) auch die Verdunstungstemperatur gesteuert und die Leistung des Kompressors (1) reduziert wird, falls der Wert der Verdunstungstemperatur unter einen vorgegebenen minimalen Wert sinkt.

3. Abluftwärmepumpe gemäß Anspruch 1, wobei der Verdunster einen Verdunstungskreislauf (14) umfasst, der aus einer gebildeten Rohrschlange aus Rohrleitungen für das zirkulierende Kühlmittel besteht, die zu einem Verdunster angeordnet ist, wobei sich ein erstes Drittel der Rohrschlange aus Rohrleitungen des Verdunsterkreislaufs gleichmäßig über die gesamte Verdunsteroberfläche erstreckt und **dadurch** einen vorteilhaften thermischen Kontakt mit der gesamten Verdunseroberfläche hat, wodurch eine große wirksame Verdunsteroberfläche bereitgestellt wird.

4. Abluftwärmepumpe nach Anspruch 1, wobei ein Diffusor (21) mit wenigstens zwei Zonen mit einem variierenden Strömungswiderstand in dem Kanal (17), der mit dem Verdunster (4) verbunden ist, eingerichtet ist.

5. Abluftwärmepumpe nach Anspruch 1, bei der Heißwasserkreisläufe jeweils zum Abzweigen und Zirkulieren von heißem Wasser, die mit dem Kondensor verbunden sind, thermisch getrennt sind, und die maximale Nutzung einer Leistung der Wärmepumpe eingerichtet ist, geringer zu sein, wenn die Wärmepumpe nur heißes Wasser erwärmt, als wenn die Wärmepumpe nur zirkulierendes Wasser erwärmt.

6. Abluftwärmepumpe nach einem der vorhergehenden Ansprüche, wobei die Leistung des Kompressors eingerichtet ist, auf einen Wert reduziert zu sein, der so gering ist, dass die Verdunstung bei einer Temperatur auftritt, die oberhalb des Gefrierpunkts von Wasser liegt.

7. Abluftwärmepumpe nach einem der Ansprüche 1 bis 5, wobei bei der höchsten Leistung des Kompressors die Verdunstung bei einer Temperatur von < -10°C auftritt.

8. Abluftwärmepumpe nach Anspruch 1, bei der die Wärmepumpe mit einer Einrichtung zum Zuführen von zusätzlicher Wärme ausgestattet ist, und eine Innenraumtemperatur durch eine Rückkopplung der Innenraumtemperatur zu einem Temperatursensor (9) einer automatischen Steuerelektronik (8), die in der Abluftwärmepumpe eingerichtet ist, gesteuert wird, die die Rotationsgeschwindigkeit der Wärmepumpe und die zusätzliche Wärme steuert, wobei die automatische Steuerelektronik (8) eingerichtet ist, die Innenraumtemperatur auf einem voreingestellten Wert für eine derart lange Zeit im Wesentlichen konstant zu halten, dass die Wärmepumpe alleine eine ausreichende Wärmeleistung gleichzeitig damit bereitstellt, dass sie ermöglicht, dass die Innenraumtemperatur auf einen bestimmten Wert unterhalb des voreingestellten Wertes abfällt, bis die zusätzliche Wärme zugeführt ist.

## Revendications

1. Pompe à chaleur pour l'air extrait, dans laquelle un rapport entre une pression de condenseur d'un condenseur (2) et une pression d'évaporateur d'un évaporateur (4) est établi de façon à être contrôlé de façon continue et de sorte que la capacité d'un compresseur (1) soit agencée pour être réduite si ledit rapport dépasse une valeur maximale prédéterminée ou si la chaleur requise tombe au-dessous de la capacité de la pompe à chaleur, de sorte que l'utilisation réduite de capacité du compresseur (1) aboutisse à ce que la pompe à chaleur, à faible charge et à charge modérée, fonctionne à une capacité relativement faible et que le coefficient thermique moyen puisse de ce fait être accru, dans laquelle la pompe à chaleur comporte un circuit de refroidissement (K) disposé au niveau de l'évaporateur (4) de la pompe à chaleur, laquelle pompe à chaleur est connectée à un canal (17) destiné au refroidissement par l'évaporateur d'un flux d'air circulant dans le canal, le compresseur (1) de la pompe à chaleur est doté d'une capacité variable et augmente la pression d'un agent réfrigérant en circulation dans le circuit de refroidissement, le condenseur (2) de la pompe à chaleur émet de la chaleur destinée à l'air intérieur ou, en variante, destinée à l'eau chaude en circulation ou au robinet (5), et dans laquelle la pompe à chaleur comprend, de plus, une vanne de détente (3) disposée en relation avec l'évaporateur qui diminue la pression et la température de l'agent réfrigérant avant que l'agent réfrigérant n'atteigne l'évaporateur, de sorte que la pompe à chaleur pour l'air extrait comporte une surface secondaire de l'évaporateur (4) d'au moins 0,3 m² par 1/s de flux d'air et se trouvant en contact avec ledit flux d'air et que la pompe à chaleur pour l'air extrait présente une relation entre une surface avant (A) et une longueur (L) de l'évaporateur dans la direction du flux d'air de telle sorte que la condition A/ (L*L) > 2 soit satisfaite.

2. Pompe à chaleur pour l'air extrait selon la revendication 1, dans laquelle également la température de l'évaporateur est contrôlée et la capacité du compresseur (1) est réduite, au moyen d'un dispositif électronique de commande automatique (8), si la valeur de la température de l'évaporateur tombe au-dessous d'une valeur minimale prédéterminée.

3. Pompe à chaleur pour l'air extrait selon la revendication 1, dans laquelle l'évaporateur comporte un circuit d'évaporateur (14) qui est constitué d'une bobine de conduit façonnée pour l'agent réfrigérant en circulation, disposée sur un évaporateur, où une première troisième partie de la bobine de tuyauterie du circuit évaporateur est répartie de façon régulière sur toute la surface de l'évaporateur et présente, de ce fait, un contact thermique favorable avec toute la surface de l'évaporateur de sorte qu'une grande surface d'évaporateur efficace soit obtenue.

4. Pompe à chaleur pour l'air extrait selon la revendication 1, dans laquelle un diffuseur (21) comportant au moins deux zones dotées d'une résistance à l'écoulement variable sont disposées dans le canal (17) connecté à l'évaporateur (4).

5. Pompe à chaleur pour l'air extrait selon la revendication 1 dans laquelle des circuits d'eau chaude destinés à l'eau chaude en circulation ou pour le robinet, respectivement, lesquels sont raccordés au condenseur, sont séparés thermiquement, et dans laquelle l'utilisation maximale de la capacité de la pompe à chaleur est établie pour être plus faible lorsque la pompe à chaleur chauffe seulement l'eau chaude que lorsque la pompe à chaleur chauffe seulement l'eau en circulation.

6. Pompe à chaleur pour l'air extrait selon l'une quelconque des revendications précédentes, dans laquelle la capacité du compresseur est agencée pour être réduite à une valeur si basse que l'évaporation se produit à une température au-dessus du point de congélation de l'eau.

7. Pompe à chaleur pour l'air extrait selon l'une quelconque des revendications 1 à 5, dans laquelle l'évaporation à la capacité la plus élevée du compresseur, se produit à une température de -10°C.

8. Pompe à chaleur pour l'air extrait selon la revendication 1 dans laquelle la pompe à chaleur est dotée de moyens destinés à fournir de la chaleur supplémentaire et dans laquelle une température intérieure est commandée par réaction de la température intérieure à un capteur de température (9) du dispositif de commande électronique automatique (8) disposé dans la pompe à chaleur pour l'air extrait, qui commande la vitesse de rotation de la pompe à chaleur et la chaleur supplémentaire, le dispositif de commande électronique automatique (8) étant agencé de façon à maintenir la température intérieure essentiellement constante à une valeur préétablie pendant une période suffisamment longue pour que la pompe à chaleur, seule, fournisse une quantité de chaleur suffisante, tout en permettant simultanément à la température intérieure de décroître jusqu'à une certaine valeur située au-dessous de la valeur préétablie jusqu'à ce que de la chaleur supplémentaire soit fournie.
